# EUROPEAN PATENT SPECIFICATION

(11) **EP 1 731 398 B1**
(45) Date of publication and mention of the grant of the patent: **13.06.2012**
(21) Application number: 06005475.6
(22) Date of filing: 17.03.2006
(51) Int. Cl.: B62B 3/16

(54) **Moulded platform and method of making a moulded platform**
Geformte Plattform und Verfahren zur Herstellung von einer geformten Plattform
Plate-forme moulée et méthode pour produire une plate-forme moulée

(30) Priority: 14.05.2005 GB 0509880
(43) Date of publication of application: 13.12.2006
(73) Proprietor: Linpac Allibert Limited, Birmingham B37 7YN (GB)
(72) Inventor: Loftus, Stephen Clive, West Midlands WS3 4JN (GB); Mallan, Lee Buchanan, Hartford Northwich CV8 3AQ (GB)
(74) Representative: Jacob, Reuben Ellis

(56) References cited:
- GB-A- 1 449 467
- US-A- 3 580 190
- US-A- 3 795 206
- US-A- 4 287 836

## Description

The present invention relates to a moulded platform and a method of making a moulded platform. In particular, but not exclusively, the invention relates to a moulded load-bearing platform, for example as used on a dolly or a pallet, or as the base of a box or container, and to a method of making such a platform.

A dolly is a small wheeled platform commonly used for moving stacks of containers, for example in retail establishments, or to assist in the loading and unloading of delivery vehicles, particularly in retail delivery situations. Typically, the dimensions of a dolly with a moulded platform range from 400mm x 600mm to 800mm x 1200mm, the weight ranges from 4kg to 20kg and the maximum load carrying capacity ranges from 200kg or less to 500kg. A pallet is a platform that is supported on legs, which allows goods to be moved easily using a forklift truck. Dollies and pallets both have a load-bearing platform on which goods may be placed. The same also applies to boxes and crates used for transporting goods. In each case, the load-bearing platform must be sufficiently strong and rigid to support the weight of the goods without significant distortion.

The load-bearing platform of products such as those described above may be made of a moulded plastics material, for example by injection moulding. Typically, a moulded platform has a substantially flat upper deck which is supported by reinforcing ribs that depend from the lower surface of the deck. In order to allow for release of the moulded platform from the moulding tool, the ribs must be either of uniform thickness or preferably slightly tapered towards their lower edges. However, this arrangement is mechanically rather inefficient, since the neutral bending axis of each rib is located towards the upper edge of the rib, close to where it joins the upper deck. Therefore, to provide the platform with sufficient strength and rigidity, relatively large ribs must be provided, requiring the use of a large volume of plastics material. This increases the cost and weight of the platform.

US 3,795,206 is the closest prior art and describes a molded plastic cargo pallet according to the preamble of claim 1 and comprising a deck with a rectangular top surface and a support structure consisting of ground engaging longitudinal support elements. The deck further includes hollow cross supports and a central longitudinal support.

It is an object of the present invention to provide a moulded platform, and a method of making a moulded platform, that mitigates at least some of the aforesaid disadvantages.

According to a first aspect of the present invention there is provided a moulded platform including a deck and a support structure including ground-engaging elements for supporting the deck above the ground, wherein the deck includes a substantially planar load-bearing surface and moulded reinforcing elements for increasing the strength and rigidity of the deck, said moulded reinforcing elements including at least one box girder element that extends at least partially through the deck in a direction substantially parallel to the plane of the load supporting surface.

The term "box girder element" as used herein refers to a beam that is made of plates, in the form of an elongate box with a hollow cross-section. The box girder element is preferably formed integrally with the platform by moulding.

The box girder element greatly increases the strength and rigidity of the moulded platform, thereby increasing the maximum payload of the platform and/or allowing the size of the moulded reinforcing elements to be reduced. In the latter case, this reduces the weight and possibly the cost of the platform.

The box girder element may include at least one internal diaphragm that extends transversely across the box girder element. The diaphragm increases the strength and rigidity of the box girder element by reducing bowing of the plates forming the sides of the box girder.

Advantageously, the box girder element includes at least one internal rib that extends longitudinally along the box girder element. This also increases the strength and rigidity of the box girder element.

The box girder element preferably has a substantially rectangular cross-section, although other shapes are also possible.

Advantageously, the ends of the box girder element are sealed, preferably by plugs inserted into the ends. Sealing the ends prevents moisture and contaminants from entering the box girder and increases the strength and rigidity of the box girder element. Alternatively, the ends may be left unsealed.

Advantageously, the platform is substantially rectangular and the box girder element extends substantially parallel to a longitudinal axis of the platform, this being the direction where additional strength is generally most needed.

The platform preferably includes a plurality of box girder elements. These box girder elements may extend in parallel directions or they may be arranged at different angles, for example lengthwise and widthwise with respect to the platform.

The moulded reinforcing elements preferably also include a plurality of reinforcing ribs that depend from the load supporting surface and/or a peripheral skirt that depends from the load supporting surface. These features also contribute to the strength and rigidity of the platform.

The moulded platform is preferably made wholly or substantially of a plastics material, for example medium density polyethylene or any other suitable plastics material.

The platform is preferably formed by injection moulding or any other suitable technique, for example rotational moulding.

According to another aspect of the invention there is provided a dolly including a moulded platform according to any one of the preceding statements of invention, and a plurality of wheels or castors for supporting the platform. The invention also extends to other products that include a moulded platform, for example pallets, crates, boxes and containers.

According to another aspect of the invention there is provided a method of making a moulded platform having a deck that includes a substantially planar load-bearing surface and moulded reinforcing elements for increasing the strength and rigidity of the deck, and a support structure including ground-engaging elements for supporting the deck above the ground, wherein the method comprises providing a mould tool having a recess for forming the moulded platform and at least one core element for forming a moulded box girder element within the deck, introducing a moulding material into the mould to form the moulded platform, withdrawing the core element, opening the mould and releasing the moulded platform from the mould.

Although the method is slightly more complicated than that required to make a conventional moulded platform, the resulting platform has greater strength and rigidity and/or requires the use of less plastics material, thereby reducing its weight and the material costs. These advantages easily outweigh the slightly increased complexity of the process and the moulding tool required to put the method into effect.

Advantageously, the moulded box girder extends at least partially through the deck in a direction substantially parallel to the plane of the load supporting surface.

Preferably, the moulded platform is as defined by one of the preceding statements of invention.

An embodiment of the invention will now be described by way of example with reference to the accompanying drawings, in which:
Figure 1 is an isometric view of a dolly from above;
Figure 2 is an isometric view of the dolly from below;

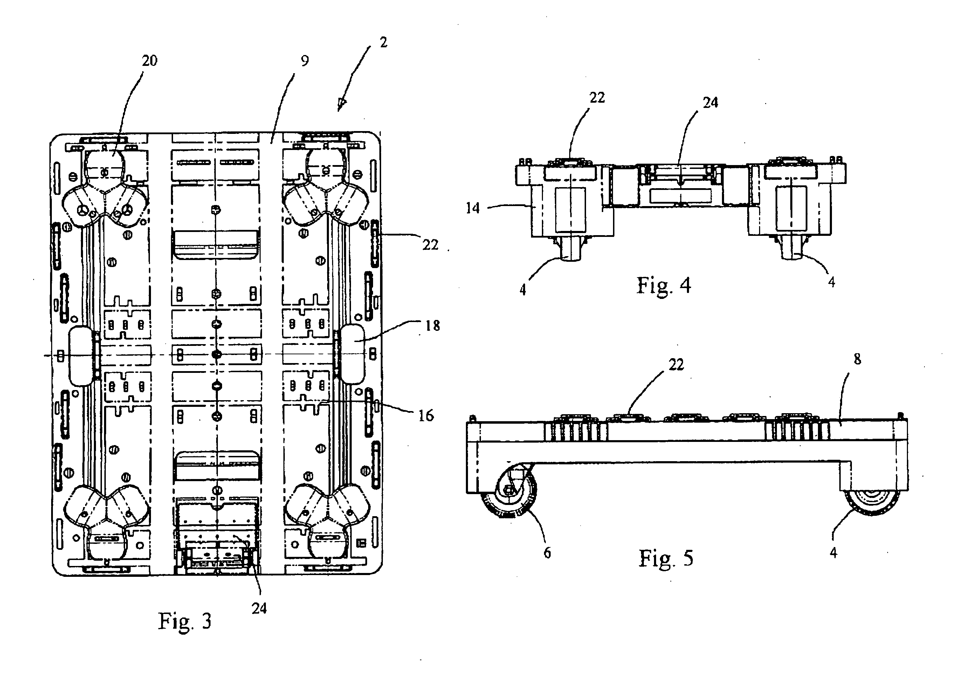

Figure 3 is a plan view of the dolly from above;
Figure 4 is an end elevation of the dolly;
Figure 5 is side elevation of the dolly;

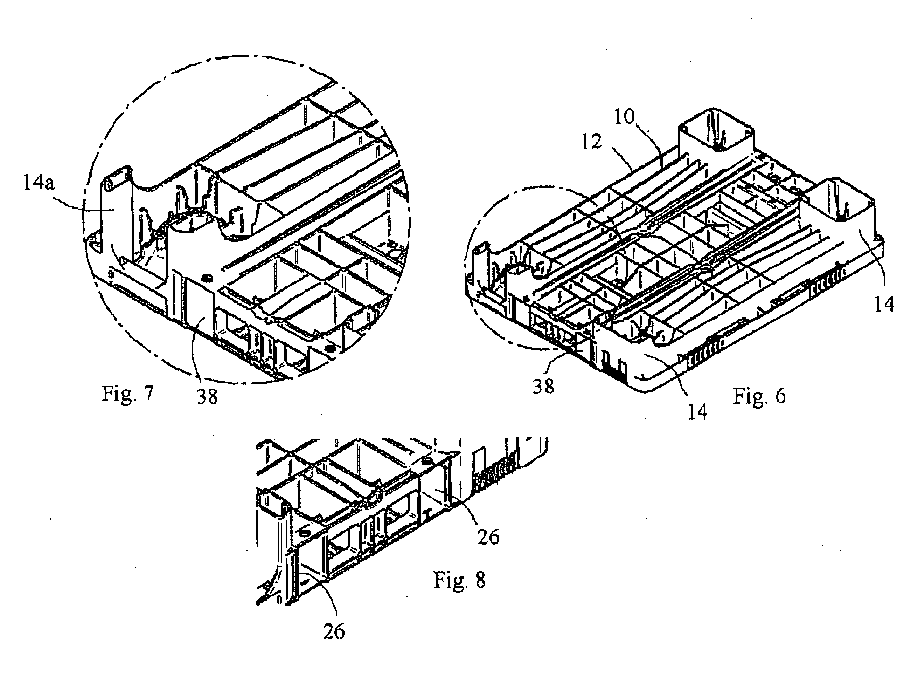

Figure 6 is an isometric view from below of a moulded platform component of the dolly;
Figure 7 is an isometric view at an enlarged scale of part of the platform shown in Figure 6;
Figure 8 is an isometric view of the same part of the platform, seen from another angle;
Figure 9 is an isometric view of a plug component of the platform;
Figures 10 and 11 are isometric views showing schematically two sequential stages of a method of making the moulded platform; and
Figures 12 and 13 are isometric sectional views, showing the same two steps of the method.

The dolly shown in the accompanying drawings includes a substantially rectangular moulded platform 2, which is made of a suitable plastics material, for example polyethylene, by injection moulding. The platform 2 is supported at its four corners by two fixed wheels 4 and two swivel castors 6, which are bolted to the underside of the platform in conventional fashion.

The platform 2 includes a deck 8 with a substantially flat upper surface 9 and a set of reinforcing ribs 10 that depend from the underside of the deck 8, including longitudinal ribs 10a and transverse ribs 10b. A peripheral skirt 12 depends from the perimeter of the deck 8. The platform also includes depending shrouds 14 for the wheels and castors. One of these shrouds 14a is partially cut away to allow foot access to a brake 15, attached to one of the castors 6.

The platform shown in the drawings also includes a number of optional features that are often provided on dollies, including:
- locating formations 16 for boxes and crates, provided on the upper surface of the deck 8;
- hand holes 18 for carrying the dolly;
- recesses 20 in the upper surface of the deck 8, for receiving the wheels/castors of a second dolly stacked on top of the first dolly;
- pop-up locating elements 22 for preventing movement of containers or crates; and
- flip-out platform extension elements 24.

The optional features described above are all conventional and so will not be described in detail.

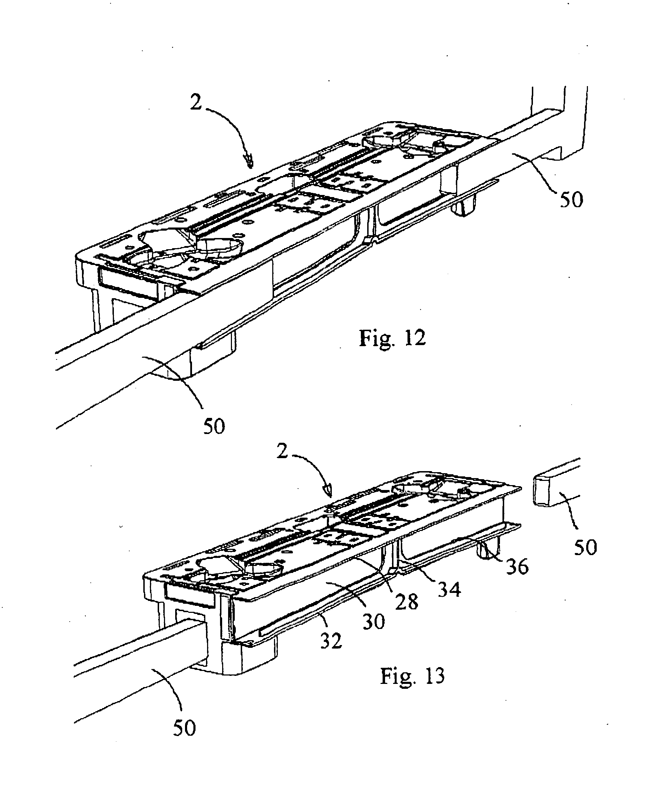

To increase the strength and rigidity of the platform 2, two box girders 26 are provided, which extend parallel to one another through the platform 8 in the direction of the platform's longitudinal axis. Each box girder 26 has a rectangular cross-section, comprising an upper plate 28 (which is part of the upper deck 8), two side plates 30 and a lower plate 32 that interconnects the lower edges of the side plates (see Figure 13). Each box girder 26 is divided lengthwise into two parts by a central diaphragm 34, and includes an internal strengthening rib 36 that extends along the upper and lower plates 28,32 and the central diaphragm 34. The plates 28,30,32 diverge slightly towards the outer ends of the box girders, to allow release of the moulded platform from the moulding tool, as will be described in further detail below.

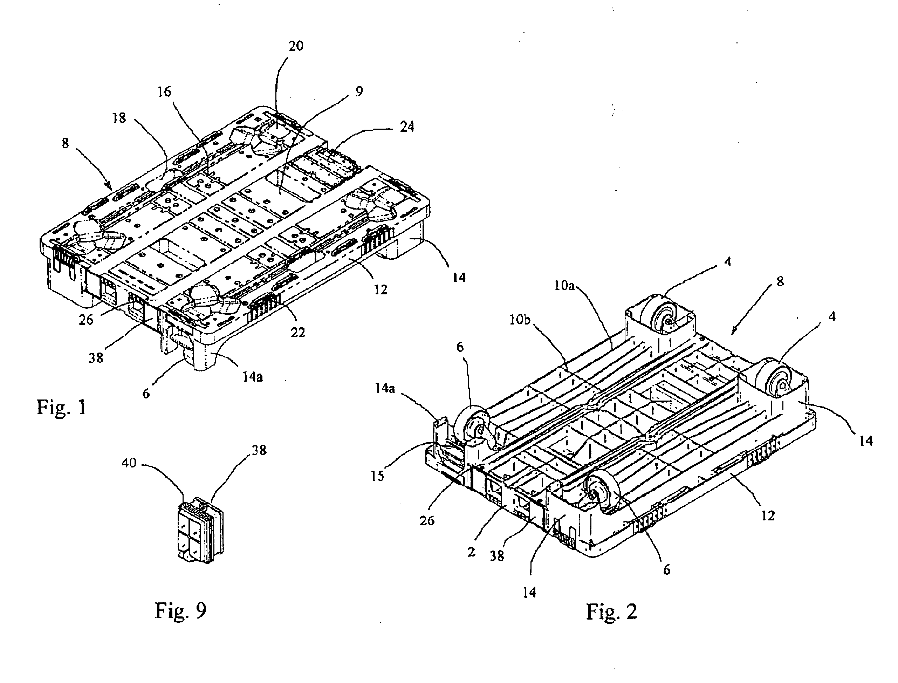

A plug 38 (see Figure 9) is located in each end of each of the box girders 26, to seal the box girder against the ingress of water and contaminants, and to provide additional support for the ends of the box girders. The plug 38 includes a set of sealing fins 40 that fit tightly against the sides of the box girder, a slot 42 that engages a pip 44 provided on the upper plate 28, and a plug boss 46 that engages a hole 48 in the lower plate 32 to lock the plug 38 in position.

The box girders 26 greatly increase the strength and rigidity of the dolly, allowing the size and thickness of the ribs to be reduced. This provides a significant reduction in the weight of the dolly.

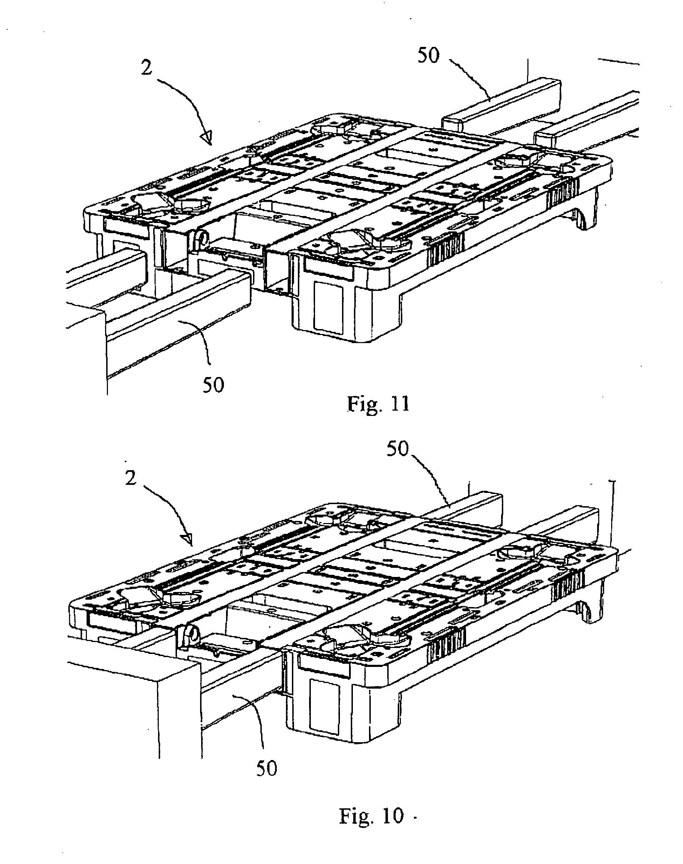

The platform is made by injection moulding. In order to form the box girders 26, the moulding tool includes two pairs of long cores 50 which are withdrawn longitudinally after the moulded product has been formed, as shown in Figures 10-13. The moulded platform is then removed from the moulding tool and the dolly is assembled by attaching the wheels and castors and any other optional components, as described above. Plugs 38 are inserted into the ends of the box girders to seal and support the girders.

Various modifications of the platform described above are ofcourse possible. For example, the platform may include only one box girder, or it may have two or more box girders. The box girders may extend longitudinally or transversely through the platform, or the platform may include a combination of longitudinal and transverse box girders. In the last case, one set of box girders may extend only partially through the platform, so that the two sets of girders do not intersect.

The moulded platform may be designed for use in a dolly as described above, or it may be designed for use as a pallet or as the base of a crate or container.

The plugs may be attached by other methods, for example gluing or welding, or they may be omitted if not needed. Additional strength may be provided if required, for example by filling the box girders with a structural foam. The box girder may have an alternative cross-sectional shape: for example, the cross-sectional shape may be a triangle or atrapezium (US trapezoid).

## Claims

1. A moulded platform (12) including a deck (8) and a support structure including ground-engaging elements (4, 6) for supporting the deck (8) above the ground, wherein the deck includes a substantially planar load-bearing surface (9) and moulded reinforcing elements (10, 12, 26) for increasing the strength and rigidity of the deck (8), said moulded reinforcing elements (10, 12, 26) including at least one box girder element (26) that extends at least partially through the deck (8) in a direction substantially parallel to the plane of the load supporting surface, **characterised in that** the box girder element (26) is divided lengthwise into two parts by a central diaphragm (34).

2. A moulded platform (2) according to claim 1, wherein diaphragm (34) extends transversely across the box girder element (26).

3. A moulded platform (2) according to claim 1 or claim 2, wherein the box girder element (26) includes at least one internal rib (36) that extends longitudinally along the box girder element (26).

4. A moulded platform (2) according to any one of the preceding claims, wherein the box girder element (26) has a substantially rectangular cross-section.

5. A moulded platform (2) according to any one of the preceding claims, wherein the ends of the box girder element (26) are sealed.

6. A moulded platform (2) according to claim 5, wherein the ends of the box girder element (26) are sealed by plugs (38) inserted into the ends.

7. A moulded platform (2) according to any one of the preceding claims, wherein the platform (2) is substantially rectangular and the box girder element (26) extends substantially parallel to a longitudinal axis of the platform.

8. A moulded platform (2) according to any one of the preceding claims, wherein the platform includes a plurality of box girder elements (26).

9. A moulded platform (2) according to any one of the preceding claims, wherein the moulded reinforcing elements include a plurality of reinforcing ribs (10a, 10b) that depend from the load supporting surface (9).

10. A moulded platform (2) according to any one of the preceding claims, wherein the moulded reinforcing elements include a peripheral skirt (12) that depends from the load supporting surface (9).

11. A moulded platform (2) according to any one of the preceding claims, that is made wholly or substantially of a plastics material.

12. A moulded platform (2) according to any one of the preceding claims, that is formed by injection moulding.

13. A dolly including a moulded platform (2) according to any one of the preceding claims, and a plurality of wheels (4) or castors (6) or supporting the platform (2).

14. A method of making a moulded platform (2) having a deck (8) that includes a substantially planar load-bearing surface (9) and moulded reinforcing elements (10, 12, 26) for increasing the strength and rigidity of the deck (8), and a support structure including ground-engaging elements (4, 6) for supporting the deck (8) above the ground, wherein the method comprises providing a mould tool having a recess for forming the moulded platform and at least one pair of core elements (50) for forming a moulded box girder element (26) within the deck (8), introducing a moulding material into the mould to form the moulded platform (2), withdrawing the core element (50), opening the mould and releasing the moulded platform from the mould tool, wherein the box girder element (26) is divided lengthwise into two parts by a central diaphragm (34).

15. A method according to claim 14, wherein the moulded box girder (26) extends at least partially through the deck (8) in a direction substantially parallel to the plane of the load supporting surface (9).

16. A method according to claim 14 or claim 15, wherein the moulded platform (2) is as claimed in any one of claims 1 to 12.

## Patentansprüche

1. Geformte Plattform (2), umfassend ein Deck (8) und eine Tragkonstruktion, die mit dem Boden in Kontakt stehende Elemente (4, 6) zum Tragen des Decks (8) über dem Boden umfasst, wobei das Deck eine im wesentlichen ebene lasttragende Oberfläche (9) und geformte Verstärkungselemente (10, 12, 26) zum Erhöhen der Festigkeit und Steifigkeit des Decks (8) umfasst, wobei die geformten Verstärkungselemente (10, 12, 26) mindestens ein Hohlkastenträgerelement (26) umfassen, das sich mindestens teilweise durch das Deck (8) in eine Richtung erstreckt, die im Wesentlichen parallel zu der Ebene der lasttragenden Oberfläche verläuft, **dadurch gekennzeichnet, dass** das Hohlkastenträgerelement (26) in Längsrichtung durch eine mittlere Membran (34) in zwei Teile geteilt ist.

2. Geformte Plattform (2) nach Anspruch 1, wobei sich die Membran (34) quer über das Hohlkastenträgerelement (26) erstreckt.

3. Geformte Plattform (2) nach Anspruch 1 oder Anspruch 2, wobei das Hohlkastenträgerelement (26) mindestens eine innere Rippe (36) umfasst, welche sich in Längsrichtung das Hohlkastenträgerelement (26) entlang erstreckt.

4. Geformte Plattform (2) nach einem beliebigen der vorhergehenden Ansprüche, wobei das Hohlkastenträgerelement (26) einen im Wesentlichen rechteckigen Querschnitt aufweist.

5. Geformte Plattform (2) nach einem beliebigen der vorhergehenden Ansprüche, wobei die Enden des Hohlkastenträgerelements (26) verschlossen sind.

6. Geformte Plattform (2) nach Anspruch 5, wobei die Enden des Hohlkastenträgerelements (26) durch in die Enden eingefügte Stopfen (38) verschlossen sind.

7. Geformte Plattform (2) nach einem beliebigen der vorhergehenden Ansprüche, wobei die Plattform (2) im Wesentlichen rechteckig ist und das Kastenträgerelement (26) sich im Wesentlichen parallel zu einer Längsachse der Plattform erstreckt.

8. Geformte Plattform (2) nach einem beliebigen der vorhergehenden Ansprüche, wobei die Plattform mehrere Hohlkastenträgerelemente (26) umfasst.

9. Geformte Plattform (2) nach einem beliebigen der vorhergehenden Ansprüche, wobei die geformten Verstärkungselemente mehrere Verstärkungsrippen (10a, 10b) umfassen, welche von der lasttragenden Oberfläche (9) nach unten verlaufen.

10. Geformte Plattform (2) nach einem beliebigen der vorhergehenden Ansprüche, wobei die geformten Verstärkungselemente eine Umfangsschürze (12) umfassen, welche von der lasttragenden Oberfläche (9) nach unten verläuft.

11. Geformte Plattform (2) nach einem beliebigen der vorhergehenden Ansprüche, die zur Gänze oder im Wesentlichen aus einem Kunststoffmaterial hergestellt ist.

12. Geformte Plattform (2) nach einem beliebigen der vorhergehenden Ansprüche, die durch Spritzgießen geformt wird.

13. Rollwagen, umfassend eine geformte Plattform (2) nach einem beliebigen der vorhergehenden Ansprüche und mehrere Räder (4) oder Laufrollen (6) zum Tragen der Plattform (2).

14. Verfahren zum Herstellen einer geformten Plattform (2) mit einem Deck (8), das eine im Wesentlichen ebene lasttragende Oberfläche (9) und geformte Verstärkungselemente (10, 12, 26) zum Erhöhen der Festigkeit und Steifigkeit des Decks (8) umfasst, und einer Tragkonstruktion, die mit dem Boden in Kontakt stehende Elemente (4, 6) zum Tragen des Decks (8) über dem Boden umfasst, wobei das Verfahren umfasst: das Vorsehen eines Formwerkzeugs mit einer Ausnehmung zum Formen der geformten Plattform und mindestens einem Paar von Kernelementen (50) zum Formen eines Hohlkastenträgerelements (26) innerhalb des Decks (8), das Einführen eines Formmaterials in das Formwerkzeug, um die geformte Plattform (12) zu formen, das entnehmen des Kernelements (50), das Öffnen des Formwerkzeugs und das Lösen der geformten Plattform aus dem Formwerkzeug, wobei das Hohlkastenträgerelement (26) durch eine mittlere Membran (34) in Längsrichtung in zwei Teile geteilt ist.

15. Verfahren nach Anspruch 14, wobei sich der geformte Bohlkastenträger (26) mindestens zum Teil durch das Deck (8) in eine Richtung erstreckt, die im Wesentlichen parallel zu der Ebene der lasttragenden Oberfläche (9) verläuft.

16. Verfahren nach Anspruch 14 oder Anspruch 15, wobei die geformte Plattform (2) nach einem beliebigen der Ansprüche 1 bis 12 ausgeführt ist.

## Revendications

1. Plate-forme moulée (2) comportant une base (8) et une structure de support comprenant des éléments d'engagement avec le sol (4, 6) permettant de supporter la base (8) au-dessus du sol, dans laquelle la base comporte une surface de support de charge essentiellement plane (9) et des éléments de renforcement moulés (10, 12, 26) permettant d'accroître la résistance et la rigidité de la base (8), lesdits éléments de renforcement moulés (10, 12, 26) comprenant au moins un élément de poutre en caisson (26) qui s'étend au moins partiellement à travers la base (8) dans une direction essentiellement parallèle au plan de la surface de support de charge, **caractérisée en ce que** l'élément de poutre en caisson (26) est divisé de façon longitudinale en deux parties par un opercule central (34).

2. Plate-forme moulée (2) selon la revendication 1, dans laquelle un opercule (34) s'étend de façon transversale à travers l'élément de poutre en caisson (26).

3. Plate-forme moulée (2) selon la revendication 1 ou la revendication 2, dans laquelle l'élément de poutre en caisson (26) comporte au moins une nervure interne (36) qui s'étend longitudinalement le long de l'élément de poutre en caisson (26).

4. Plate-forme moulée (2) selon l'une quelconque des revendications précédentes, dans laquelle l'élément de poutre en caisson (26) présente une section transversale essentiellement rectangulaire.

5. Plate-forme moulée (2) selon l'une quelconque des revendications précédentes, dans laquelle les extrémités de l'élément de poutre en caisson (26) sont fermées de façon étanche.

6. Plate-forme moulée (2) selon la revendication 5, dans laquelle les extrémités de l'élément de poutre en caisson (26) sont fermées de façon étanche par des bouchons insérés (38) dans les extrémités.

7. Plate-forme moulée (2) selon l'une quelconque des revendications précédentes, dans laquelle la plate-forme (2) est essentiellement rectangulaire et l'élément de poutre en caisson (26) s'étend de façon essentiellement parallèle à un axe longitudinal de la plate-forme.

8. Plate-forme moulée (2) selon l'une quelconque des revendications précédentes, dans laquelle la plate-forme comporte une pluralité d'éléments de poutre en caisson (26).

9. Plate-forme moulée (2) selon l'une quelconque des revendications précédentes, dans laquelle les éléments de renforcement moulés comportent une pluralité de nervures de renforcement (10a, 10b) qui dépendent de la surface de support de charge (9).

10. Plate-forme moulée (2) selon l'une quelconque des revendications précédentes, dans laquelle les éléments de renforcement moulés comportent une jupe périphérique (12) qui dépend de la surface de support de charge (9).

11. Plate-forme moulée (2) selon l'une quelconque des revendications précédentes, laquelle est constituée totalement ou essentiellement d'un matériau de matière plastique.

12. Plate-forme moulée (2) selon l'une quelconque des revendications précédentes, laquelle est formée par moulage par injection.

13. Chariot mobile comprenant une plate-forme moulée (2) selon l'une quelconque des revendications précédentes et une pluralité de roues (4) ou de roues directrices (6) pour supporter la plate-forme (2).

14. Procédé de fabrication d'une plate-forme moulée (2) comportant une base (8) qui inclut une surface de support de charge essentiellement plane (9) et des éléments de renforcement moulés (10, 12, 26) pour accroître la résistance et la rigidité de la base (8) et une structure de support comprenant des éléments d'engagement avec le sol (4, 6) pour supporter la base (8) au-dessus du sol, dans lequel le procédé comprend de fournir un outil de moulage présentant un évidement pour former la plate-forme moulée et au moins une paire d'éléments de noyau (50) permettant de former un élément de poutre en caisson (26) à l'intérieur de la base (8), d'introduire un matériau de moulage dans le moule pour former la plate-forme moulée (2), de retirer l'élément de noyau (50), d'ouvrir le moule et de libérer la plate-forme moulée de l'outil de moulage, dans lequel l'élément de poutre en caisson (26) est divisé suivant la longueur en deux parties par un opercule central (34).

15. Procédé selon la revendication 14 dans lequel l'élément moulé de poutre en caisson (26) s'étend au moins partiellement à travers la base (8) dans une direction essentiellement parallèle au plan de la surface de support de charge (9).

16. Procédé selon la revendication 14 ou la revendication 15, dans lequel la plate-forme moulée (2) est revendiquée selon l'une quelconque des revendications 1 à 12.
